# EUROPÄISCHE PATENTSCHRIFT

(11) **EP 0 814 947 B1**
(45) Veröffentlichungstag und Bekanntmachung des Hinweises auf die Patenterteilung: **04.08.1999**
(21) Anmeldenummer: 96907410.3
(22) Anmeldetag: 09.03.1996
(51) Int. Cl.: B29C 47/08, B29C 47/20

(54) **EXTRUSIONSKOPF FÜR KUNSTSTOFFEXTRUDER**
EXTRUSION HEAD FOR PLASTICS EXTRUDERS
TETE D'EXTRUSION POUR EXTRUDEUSES DE MATIERES PLASTIQUES

(30) Priorität: 15.03.1995 DE 19509375
(43) Veröffentlichungstag der Anmeldung: 07.01.1998
(73) Patentinhaber: Machinefabriek "de Rollepaal" B.V., 7700 AA Dedemsvaart (NL)
(72) Erfinder: VEEN, Hendrik, Willem, NL-7731 KP Ommen (NL); MULDER, Dirk, NL-7623 DX Bonne (NL)
(74) Vertreter: Busse & Busse Patentanwälte
(86) Internationale Anmeldenummer: EP9601017
(87) Internationale Veröffentlichungsnummer: WO9628294

(56) Entgegenhaltungen:
- DE-A- 2 039 735
- DE-A- 2 941 260
- US-A- 3 321 805
- US-A- 3 570 062
- US-A- 3 833 247
- DATABASE WPI Week 8915 Derwent Publications Ltd., London, GB; AN 89-107071 XP002007648 & DD,A,261 991 (VEB GUMMIW BERLIN) , 16.November 1988

## Beschreibung

Die Erfindung bezieht sich auf einen Extrusionskopf für Kunststoffextruder mit einem einer Brecherplatte in Extrusionsrichtung axial nachgeordneten, von einem Innen- und einem Außenkonus gebildeten Düsenkopf.

Soll nach dem Extrudieren eines Produktes der Kunststoffextruder für die Extrusion eines anderen, insbesondere in seinen Abmessungen abweichenden Produktes eingesetzt werden, bedarf es eines Wechels entweder des gesamten, überaus schweren und schwer zu handhabenden Extrusionskopfes oder aber zumindest dessen Düsenkopfes, was in beiden Fällen mit erheblichem Aufwand verbunden ist und eine im allgemeinen mehrstündige Stillsetzung des Extruders erfordert. Um zu vermeiden, daß sich der im Extruder befindliche, für die vorausgegangene Produktion verwendete Kunststoff verfestigt und die mit dem Kunststoff in Berührung stehenden Aggregate des Extruders verstopft oder gar unbrauchbar macht, muß der Extruder vor dem eigentlichen Wechselvorgang mit einer speziellen Kunststoffmasse betrieben werden, die nicht verbrennen, degradieren und sich nicht verfestigen kann und zudem günstige Aufheiz- und Wärmeleiteigenschaften darbietet.

Dies gilt auch für einen bekannten Extrusionskopf (DE-A-2039735), der radial in einen Einzugsteil, ein Düsengehäuse und eine Kalibrierdüse unterteilt ist. Zwischen dem Einzugsteil und dem Düsengehäuse ist eine Dornhalteeinrichtung eingespannt, die an einer Seite einen zweiteiligen Kalibrierdorn und an der anderen Seite einen Ansatzteil für die Lagerung des austrittsseitigen Stirnendes der Extruderschnecke trägt.

Die Erfindung befaßt sich mit dem Problem, einen Extrusionskopf zu schaffen, der schnell und mit geringem Aufwand für das Extrudieren eines anderen Produktes einrichtbar ist. Die Erfindung löst dieses Problem durch einen Extrusionskopf mit den Merkmalen des Anspruchs 1. Hinsichtlich wesentlicher weiterer Ausgestaltungen wird auf die Ansprüche 2 bis 15 verwiesen.

Der Extrusionskopf nach der Erfindung ermöglicht ein Umrüsten für das Extrudieren eines abweichenden Produktes in einer außerordentlich kurzen Zeit, so daß der Einsatz eines speziellen Kunststoffes zur Vorbereitung von Wechselarbeiten entbehrlich ist. Der Umrüst- oder Einrichtungsvorgang ist dabei außerordentlich einfach und enthebt der Notwendigkeit zur Handhabung schwerer Teile. Da der Mündungsteil nur eine verhältnismäßig geringe Masse hat, kann er schnell und mit geringem Energieaufwand auf Betriebstemperatur gebracht werden. Auch die Vorbereitung des abgenommenen Mündungsteils für eine spätere Wiederverwendung ist vergleichsweise gering.

Zahlreiche weitere Einzelheiten und Vorteile ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: einen die Brecherplatte und den Düsenkopf des Extrusionskopfes nach der Erfindung veranschaulichenden Axialschnitt,
- Fig. 2: eine Vorderansicht zu Fig. 1 in Halbdarstellung, und
- Fig. 3 und 4: Darstellungen ähnlich Fig. 1 einer abgewandelten Ausführung, und
- Fig. 5: eine Seitenansicht einer Wechselhilfsvorrichtung.

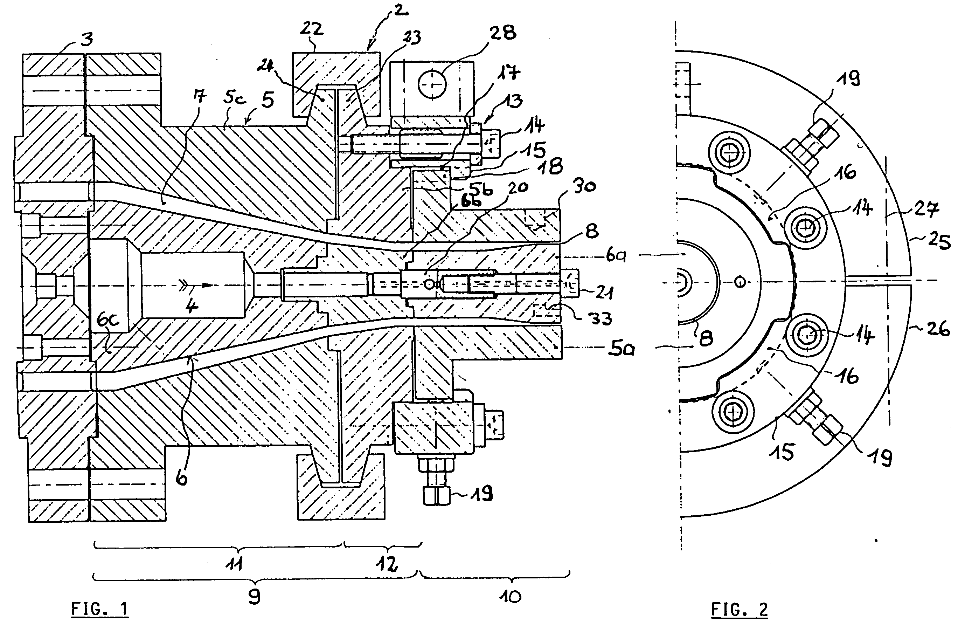

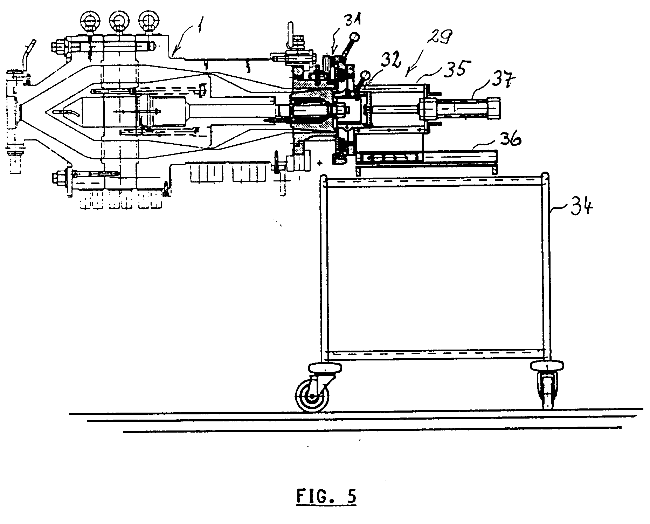

Der in Fig. 5 lediglich schematisch veranschaulichte und als Ganzes mit 1 bezeichnete Extrusionskopf nach der Erfindung umfaßt gemäß Fig. 1 einen in Extrusionsrichtung 4 einer Brecherplatte 3 axial nachgeordneten Düsenkopf 2, der im einzelnen von einem Außenkonus 5 und einem Innenkonus 6 gebildet ist. Außen- und Innenkonus 5,6 begrenzen gemeinsam außen- bzw. innenseitig einen Düsenkanal 7, durch den die zu extrudierende plastische Kunststoffmasse hindurchgepreßt wird, bevor sie beispielsweise in Gestalt eines zylindrischen Rohres bei 8 aus dem Düsenkanal 7 austritt.

Der Düsenkopf 2 ist in radialer Richtung in einen Hauptteil 9 und einen Mündungsteil 10 unterteilt, wobei in dem dargestellten Beispiel der Hauptteil 9 seinerseits in radialer Richtung in einen der Brecherplatte 3 benachbarten Basisteil 11 und einen Zwischenteil 12 unterteilt ist, der zwischen dem Basisteil 11 und dem Mündungsteil 10 gelegen ist.

Der Außenkonus 5a des Mündungsteils 10 ist am Außenkonus 5b des Zwischenteils 12 gesondert festgelegt, und zwar bei dem dargestellten Beispiel durch einen bajonettartigen Schnellverschluß 13. Der Schnellverschluß 13 umfaßt einen am Außenkonus 5b des Zwischenteils 12 durch Verbindungsschrauben 14 festlegbaren Verschluß- und Klemmring 15, der einen vorderseitig von den Verschlußansätzen 16 begrenzten, durch die Verbindungsschrauben 14 veränderbaren Klemmspalt 17 für eine Aufnahme der auf die Verschlußansätze 16 abgestimmten Riegelansätze 18 am Außenkonus 5a des Mündungsteils 10 bildet. Der Klemmspalt 17 hat einen Durchmesser, der den die Riegelansätze 18 am Außenkonus 5a des Mündungsteils 10 umschreibenden Durchmesser geringfügig überschreitet, so daß der Außenkonus 5a begrenzt radial im Klemmspalt 17 verstellbar aufgenommen ist. Seine genaue radiale Position wird mit Hilfe von Stellschrauben 19 vorgegeben, die den Verschluß- und Klemmring 15 radial durchgreifen und mit dem Ende ihres Schraubenbolzens in den ringförmigen Klemmspalt eingreifen. Durch Lockern der Verbindungsschrauben 14 und Verdrehen des Außenkonus 5a des Mündungsteils 10 relativ zum Verschluß- und Klemmring 15, bis die Riegelansätze 18 mit den Lücken zwischen den Verschlußansätzen 16 fluchten, kann der Außenkonus 5a des Mündungsteils 10 schnell und einfach für eine Abnahme freigegeben werden. In gleicher Weise kann ein anderer Außenkonus 5a mit anderen Abmessungen, mit anderer Formgebung, mit anderer Ausrüstung und/oder aus anderen Materialien für ein anderes Produkt schnell und einfach angesetzt, durch Verdrehen verriegelt und durch Anziehen der Verbindungsschrauben festgelegt werden.

Der Innenkonus 6a des Mündungsteils 10 sitzt bei der Ausführung nach Fig. 1 in der dargestellten Betriebsstellung unmittelbar auf einem zentralen Führungsteil 20 und ist an dem benachbarten Innenkonus 6b mittels einer mit dem Führungsteil 20 verschraubbaren, zentralen Kopfschraube 21 festgelegt. Der Führungsteil 20 ist von einer zentralen, mit einem Außengewindeteil in den Innenkonus 6b des Zwischenteils 12 einschraubbaren Spindel mit Innengewinde am mündungsseitigen Ende gebildet, die sich annähernd über die halbe Länge des Innenkonus 6a des Mündungsteils 10 erstreckt. Zum Abnehmen des Innenkonus 6a des Mündungsteils 10 genügt ein Lösen der Kopfschraube 21, wonach der Außenkonus 6a schnell und unschwer axial abgezogen und durch einen anderen ersetzt werden kann.

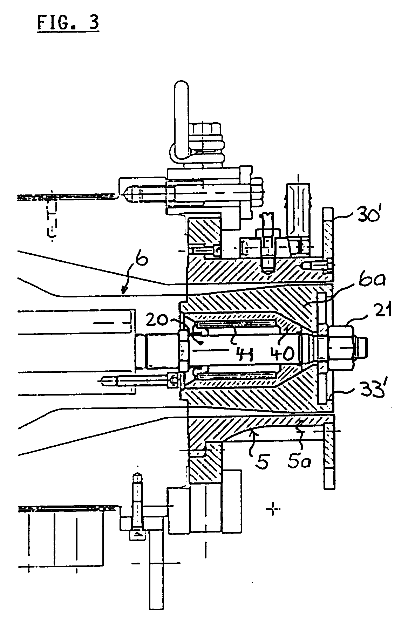

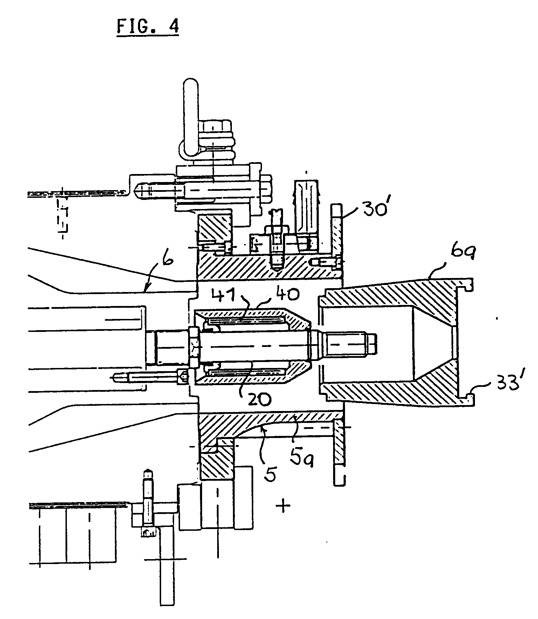

Bei der Ausführung des Extrusionskopfes nach Fig. 3 und 4 ist auf dem Führungsteil 20 ein Aufsatzteil 40 angeordnet, das im Innern mit elektrischen Heizelementen 41 versehen ist, mit denen der Innenkonus 6a des Mündungsteils 10 beheizbar ist, der auf von Außenseite des hülsenförmigen Aufsatzteils 40 geführt auf dieses aufsetzbar ist. Eine derartige Ausbildung hat den Vorteil, daß beim Auswechseln des Innenkonus 6a keine elektrischen Verbindungen zu den Heizelementen 41 gelöst werden müssen, die Bestandteil des Führungsteils bilden.

Durch die vorstehend beschriebene Art der Festlegung der Konen 5a,6a des Mündungsteils 10 an den ihnen benachbarten Konen 5b,6b des Zwischenteils 12 kann auf schnellem und einfachem Wege ein Umrüsten bzw. Einrichten des Düsenkopfes 2 für ein anderes Produkt vorgenommen werden, wobei beispielsweise das Auswechseln des Innenkonus 6a des Mündungsteils 10 für sich vorgenommen werden kann, um beispielsweise ein Rohr od.dgl. Extrudat mit größerer oder kleinerer Wanddicke bei unveränderten Außenabmessungen herzustellen. Bei einem Auswechseln des Außenkonus 5a des Mündungsteils für sich kann ein Rohr od.dgl. mit größerer Außenabmessung und größerer Wanddicke hergestellt werden, während durch Auswechseln beider Konen 5a,6a des Mündungsteils innerhalb eines bestimmten Bereiches Extrudate mit verschiedenen Außen- und dazu wählbaren Innenabmessungen hergestellt werden können. Die Konen 5a,6a des Mündungsteils 10 haben ein verhältnismäßig geringes Gewicht, das sich in der Größenordnung von etwa 5% oder darunter des Gewichts eines sonst üblicherweise gewechselten Düsenkopfes bewegt, so daß mit dem Wechselvorgang nur geringe Energieverluste verbunden sind. Die relativ kleinen und leichten Teile können auch leicht und platzsparend magazinisiert sowie schnell und einfach gesäubert und für einen späteren erneuten Einsatz vorbereitet werden. Der Wechselvorgang eines Kones oder beider Konen des Mündungsteils 10 ist innerhalb weniger Minuten durchführbar, so daß der Wechselvorgang ohne den Einsatz einer speziellen Kunststoffmasse vorgenommen werden kann, der bislang zur Durchführung von Wechselvorgängen unabdingbar war. Infolge des schnellen Wechselvorganges kann mit dem schon zuvor für Extrusionsvorgänge benutzten und im Extruder vorhandenen Kunststoff die Herstellung des neuen, in den Abmessungen veränderten Produkts aufgenommen werden, wodurch sich die Produktivität des Kunststoffextruders erheblich verbessert.

Die Unterteilung des Hauptteils 9 des Düsenkopfes 2 in einen Basisteil 11 und einen Zwischenteil 12 erweitert das Spektrum der möglichen Abmessungsveränderungen durch die Möglichkeit, zusätzlich zu Wechselvorgängen des Mündungsteils auch Wechselvorgänge unter Einschluß der Konen 5b und 6b des Zwischenteils 12 vornehmen zu können. Sofern hierfür Bedarf ist, läßt sich durch die zweifache radiale Unterteilung des Düsenkopfes 2 ein weiter Abmessungsbereich abdecken, da unterschiedlichen Konuskombinationen des Zwischenteils 12 jeweils wieder unterschiedliche Konuskombinationen des Mündungsteils 10 zuordnungsfähig sind. Sofern ein solches breites Spektrum an Abmessungsveränderungen nicht erforderlich ist, genügt eine Unterteilung des Düsenkopfes 2 in einen Hauptteil 9 und einen Mündungsteil 10.

Bei den dargestellten Ausführungsbeispielen sind der Außenkonus 5b des Zwischenteils 12 und der Außenkonus 5c des Basisteils 11 durch einen Spannring 22 untereinander verbunden, der benachbarte konische Klemmflansche 23,24 an den Außenkonen 5b und 5c der Düsenkopfteile 11,12 umgreift und zweckmäßig von zwei Halbteilen 25,26 gebildet ist, die an einem Ende durch eine lediglich mit ihrer Achslinie veranschaulichte Spannschraube 27 spannbar und an ihrem gegenüberliegenden Ende durch ein Gelenk (nicht dargestellt) verbunden sind, das ein Aufklappen nach Lösen der Spannschraube 27 in radialer Richtung erlaubt. Durch Öffnen des Spannringes können die Düsenkopfteile 10 und 12 gemeinsam schnell und einfach vom Düsenkopfteil 11 abgenommen und durch andere Düsenkopfteile geänderter Abmessung ersetzt werden. Auch dieser Vorgang ist in Minutenschnelle durchführbar, wobei eine dem Verschluß- und Klemmring 15 zugeordnete Anschlußhülse 28 das Anschließen eines Lasthubmittels ermöglicht, das den Vorgang des gemeinsamen Abnehmens der Düsenkopfteile 10,12 erleichtert.

Anstelle der Spannringverbindung können die Außenkonen 5b und 5c auch durch einen bajonettartigen Schnellverschluß, vorzugsweise in einer Ausbildung miteinander verbindbar sein, der jener der Verbindung der Außenkonen 5a und 5b entspricht. Schließlich können die Außenkonen 5a und 5b bzw. 5b und 5c auch durch Permanentmagnete untereinander verbunden werden, die mittels elektrischer Impulse magnetisier- und entmagnetisierbar sind.

Der Innen- und der Außenkonus 5a,6a des Mündungsteils 10 ist zweckmäßig jeweils mit geeigneten Kupplungsmitteln für eine Verbindung mit einem Stütz-oder Greiferteil einer Wechselhilfsvorrichtung versehen, die in Fig. 3 als Ganzes mit 29 bezeichnet ist. Als Kupplungsmittel am Außenkonus 5a des Mündungsteil 10 können beispielsweise eine Anzahl von über den Umfang verteilten Senkbohrungen 30 oder eine frontseitige, mit Randausnehmungen versehene Anschlußplatte 30 vorgesehen sein, in die entsprechende Glieder eines Stütz- oder Greiferteils 31 eingreifen können, das in der Wechselvorrichtung 29 für die Handhabung des Außenkonus 5a des Mündungsteils 10 vorgesehen ist. Als Kupplungsmittel für einen zur Handhabung des Innenkonus 6a des Mündungsteils bestimmten Stütz- oder Greiferteil 32 der Wechselhilfsvorrichtung 29 kann der Innenkonus 6a mit frontseitig zugänglichen, hinterschnittenen Kupplungsöffnungen 33 oder auch mit einer über die Stirnseite des Innenkonus 6a vorstehenden, hintergreifbaren Ringschulter 33' versehen sein, so daß der Innenkonus 6a ebenso wie der Außenkonus 5a des Mündungsteils 10 mit Hilfe der Wechselhilfsvorrichtung 29 vollmechanisch handbar ist, was sowohl jeweils einzeln als auch gemeinsam vorgenommen werden kann. Bei dem dargestellten Beispiel ist die Wechselhilfsvorrichtung 29 auf einem verfahrbaren Wagen 34 abgestützt und umfaßt Führungen 35,36 für eine Bewegung der Teile 31,32 parallel zur Mittelachse des Extrusionskopfes 1. Ein Druckmittelantrieb 37 kann die Verschiebebewegungen erleichtern, was insbesondere dann von Vorteil ist, wenn beide Düsenkopfteile 10,11 nach Lösen des Spannringes 22 gemeinsam abgenommen werden und durch Wechselteile zu ersetzen sind.

## Patentansprüche

1. Extrusionskopf (1) für Kunststoffextruder mit einem in Extrusionsrichtung (4) einer Brecherplatte (3) koaxial nachgeordneten, von einem Außen (5)- und einem Innenkonus (6) gebildeten Düsenkopf (2), **dadurch gekennzeichnet,** daß der Düsenkopf (2) in zumindest annähernd radialen Ebenen in einen Hauptteil (9) und einen Mündungsteil (10) unterteilt ist, und die Konen (5a;6a) des Mündungsteils (10) unabhängig voneinander an den jeweils benachbarten Konen des Hauptteils (9) festlegbar und unabhängig voneinander im Schnellwechsel gegen andere Konen austauschbar sind, wobei der Hauptteil (9) seinerseits in radialer Richtung in einen der Brecherplatte (3) benachbarten Basisteil (11) und einen Zwischenteil (12) unterteilt ist und die Konen (5b,6b) des Zwischenteils (12) unabhängig von einander an den jeweils benachbarten Konen (5c;6c) des Basisteils (11) festlegbar und im Schnellwechsel gegen Konen anderer Abmessungen austauschbar sind.

2. Extrusionskopf nach Anspruch 1, **dadurch gekennzeichnet,** daß die Innenkonen (6a;6b;6c) der Düsenkopfteile (9,10,11,12) mittels konzentrischer Zentrieransätze gegeneinander zentrier- und untereinander durch zentrale Schraubmittel (20,21) verbindbar sind.

3. Extrusionskopf nach einem der Ansprüche 1 oder 2, **dadurch gekennzeichnet**, daß der Innenkonus (6a) des Mündungsteils (10) auf ein zentrales Führungsteil (20) aufsetzbar und mittels einer mit dem Führungsteil (20) verschraubbaren, zentralen Kopfschraube (21) festlegbar ist.

4. Extrusionskopf nach Anspruch 3, **dadurch gekennzeichnet**, daß der Führungsteil von einer zentralen, mit einem Außengewindeteil in den Innenkonus (6b) des Zwischenteils (12) einschraubbaren Spindel mit Innengewinde am mündungsseitigen Ende gebildet ist.

5. Extrusionskopf nach Anspruch 3 oder 4, **dadurch gekennzeichnet**, daß auf dem zentralen Führungsteil (20) ein Aufsatzteil (40) angeordnet ist, auf das der Innenkonus (6a) des Mündungsteils (10) aufsetzbar ist und das innenseitig mit Heizelementen (41) versehen ist.

6. Extrusionskopf nach einem der Ansprüche 1 bis 5, **dadurch gekennzeichnet**, daß der Außenkonus (5a) des Mündungsteils (10) begrenzt radial verstellbar am Außenkonus (5b) des benachbarten Düsenkopfteils (9;12) festlegbar ist.

7. Extrusionskopf nach einem der Ansprüche 1 bis 6, **dadurch gekennzeichnet**, daß der Außenkonus (5a) des Mündungsteils (10) am Außenkonus (5b) des benachbarten Düsenkopfteils mittels eines bajonettartigen Schnellverschlusses (13) festlegbar ist.

8. Extrusionskopf nach Anspruch 6 und 7, **dadurch gekennzeichnet**, daß der bajonettartige Schnellverschluß (13) einen am Außenkonus (5b) des dem Mündungsteil (10) benachbarten Düsenkopfteils (9;12) angeschraubten Verschluß- und Klemmring (15) umfaßt, der einen vorderseitig von seinen Verschlußansätzen (16) begrenzten, durch die Verbindungsschrauben (14) veränderbaren Klemmspalt (17) für eine begrenzt radialverstellbare Aufnahme von Riegelansätzen (18) am Außenkonus (5a) des Mündungsteils (10) bildet.

9. Extrusionskopf nach Anspruch 8, **dadurch gekennzeichnet**, daß der Verschluß- und Klemmring (15) mit radialen, mit dem Ende ihres Schraubenbolzens in den Klemmspalt (17) eingreifenden Stellschrauben (19) versehen ist.

10. Extrusionskopf nach einem der Ansprüche 1 bis 9, **dadurch gekennzeichnet**, daß der Außenkonus (5b) des Zwischenteils (12) und der (5c) des Basisteils (11) untereinander an konischen Klemmflanschen (23;24) mittels eines diese umgreifenden Spannringes (22) verbindbar sind.

11. Extrusionskopf nach einem der Ansprüche 1 bis 10, **dadurch gekennzeichnet**, daß der Außenkonus (5b) des Zwischenteils (12) und der (5c) des Basisteils (11) untereinander durch einen bajonettartigen Schnellverschluß verbindbar sind.

12. Extrusionskopf nach Anspruch 11, **dadurch gekennzeichnet**, daß der Schnellverschluß zwischen den Außenkonen (5b,5c) des Zwischen- und des Basisteils (12,11) dem Schnellverschluß zwischen den Außenkonen (5a,5b) des Mündungs- und des Zwischenteils (10,12) entspricht.

13. Extrusionskopf nach einem der Ansprüche 1 bis 6, **dadurch gekennzeichnet**, daß zur Verbindung der Außenkonen (5a,5b;5b,5c) untereinander durch elektrische Beaufschlagung magnetisier- und entmagnetisierbare Permanentmagnete versehen sind.

14. Extrusionskopf nach einem der Ansprüche 1 bis 13, **dadurch gekennzeichnet**, daß der Innen- und der Außenkonus (5a,6a) des Mündungsteils (10) jeweils mit Kupplungsmitteln (30;33) für eine Verbindung mit einem Stütz- oder Greiferteil (31;32) einer Wechselhilfsvorrichtung (29) versehen sind, mittels der die Konen (5a,6a) des Mündungsteils (10) gemeinsam oder wahlweise einzeln abnehm-, an- und/oder umsetzbar sind.

15. Extrusionskopf nach Anspruch 14, **dadurch gekennzeichnet**, daß die Wechselhilfsvorrichtung (29) als Ganzes in Längs- und/oder Querrichtung verschiebbar ist oder in Längs- und/oder Querrichtung verschiebbare Stütz- und Greifteile (31;32) aufweist.

## Claims

1. Extrusion head (1) for plastics extruders comprising a die head (2) which is arranged coaxially downstream, in the direction of extruding (4), of a jaw plate (3) and is formed by an outer cone (5) and an inner cone (6), characterized in that the die head (2) is divided, in an at least substantially radial planes, into a main part (9) and a orifice part (10), and the cones (5a; 6a) of the orifice part (10) are securable in position, independently of each other, on the respective adjacent cones of the main part (9), and are, indepently of each other, exchangeable against other cones in a rapid exchanging operation, the main part (9) being, in turn, divided in radial direction into a base part (11), which is adjacent to the jaw plate (3), and an intermediate part (12), and the cones (5b; 6b) of the intermediate part (12) are securable in position, independently of each other, on the respective adjacent cones (5c; 6c) of the base part (11), and are exchangeable against other cones having different dimensions in a rapid exchanging operation.

2. Extrusion head according to claim 1 or claim 2, characterized in that the inner cones (6a; 6b; 6c) of the die head parts (9, 10, 11, 12) may be centered relative to one another by means of concentric centering shoulders and are interconnectable by central screw-connection means (20, 21).

3. Extrusion head according to one of claim 1 or 2, characterized in that the inner cone (6a) of the orifice part (10) is mountable on a central guiding part (20) and is securable in position by means of a central cap screw (21) which is screw-connectable to the guiding part (20).

4. Extrusion head according to claim 3 characterized in that the guiding part is formed by a central spindle which has an inner thread on the orifice end and can be screwed into the inner cone (6b) of the intermediate part (12) via an outside thread.

5. Extrusion head according to claim 3 or claim 4, characterized in that a top part (40), on to which the inner cone (6a) of the orifice part (10) is mountable and which is internally provided with heating elements (41), is arranged on the central guiding part (20).

6. Extrusion head according to one of claims 1 to 5, characterized in that the outer cone (5a) of the orifice part (10) is securable on the outer cone (5b) of the adjacent die head part (9; 12) to allow for limited radial adjustment.

7. Extrusion head according to one of claims 1 to 6, characterized in that the outer cone (5a) of the orifice part (10) is securable in position on the outer cone (5b) of the adjacent die head part by means of a bayonet-type snap closure (13).

8. Extrusion head according to claims 6 and 7, characterized in that the bayonet-type snap closure comprises a locking and clamping ring (15), which is screw-connected to the die head part (9; 12) adjacent to the orifice part (10), and which forms a clamping gap (17), which is frontally defined by its locking projections (16) and is adjustable by means of the connecting screws 14), for a limited radially adjustable accommodation of interlocking projections (18), on the outer cone (5a) of the orifice part (10).

9. Extrusion head according to claim 8, characterized in that the locking and clamping ring (15) is provided with radial adjusting screws (19), the ends of the screw bolts of which engage in the clamping gap (17).

10. Extrusion head according to one of claims 1 to 9, characterized in that the outer cone (5b) of the intermediate part (12) and the outer cone (5c) of the base part (11) are interconnectable along conical clamping flanges (23; 24) by means of a clamping ring (22) which embraces said flanges.

11. Extrusion head according to one of claims 1 to 10, characterized in that the outer cone (5b) of the intermediate part (12) and the outer cone (5c) of the base part (11) are interconnectable by means of a bayonet-type snap closure.

12. Extrusion head according to claim 11, characterized in that the snap closure between the outer cones (5b, 5c) of the intermediate part and the base part (12, 11) corresponds to the snap closure between the outer cones (5a, 5b) of the orifice and the intermediate part (10, 12).

13. Extrusion head according to one of claims 1 to 6, characterized in that permanent magnets, which are magnetizable and demagnetizable by electrical pulses, are provided for interconnecting the outer cones (5a, 5b; 5b, 5c).

14. Extrusion head according to one of claims 1 to 13, characterized in that the inner and outer cones (5a, 6a) of the orifice part (10) are, in each case, provided with coupling means (30; 33) for connection to a supporting or gripping part (31; 32) of an auxiliary exchanging apparatus (29), by means of which the cones (5a, 6a) of the orifice part (10) are removable, connectable and/or transferable, either jointly or separately.

15. Extrusion head according to claim 14, characterized in that the auxiliary exchanging apparatus (29) is displaceable, as a unit, in the longitudinal and/or the transverse direction, or comprises supporting and gripping parts (31; 32) which are displaceable in the longitudinal and/or transverse direction.

## Revendications

1. Tête d'extrusion (1) pour une extrudeuse de matière plastique comprenant à la suite de la plaque de rupture (3), coaxialement dans le sens de l'extrusion (4), une tête de buse (2) formée d'un cône extérieur (5) et d'un cône intérieur (6),
caractérisée en ce que
• la tête de buse (2) est subdivisée au moins sensiblement dans des plans radiaux en une partie principale (9) et un embout (10) formant embouchure,
• les cônes (5a, 6a) de l'embout (10) se fixent indépendamment l'un de l'autre sur des cônes respectifs voisins de la partie principale (9) et peuvent être remplacés par d'autres cônes, indépendamment l'un de l'autre par un changement rapide,
• la partie principale (9) étant elle-même subdivisée dans la direction radiale entre une base (11) voisine de la plaque de rupture (3) et une pièce intermédiaire (12), et les cônes (5, 6b) de la pièce intermédiaire (12) se fixent indépendamment l'un de l'autre sur les cônes respectifs voisins (5c, 6c) de la base (11) et peuvent être remplacés par une opération de changement rapide par des cônes ayant d'autres dimensions.

2. Tête d'extrusion selon la revendication 1,
caractérisée en ce que
les cônes intérieurs (6a, 6b, 6c) des parties de la tête de buse (9, 10, 11, 12) sont reliés à l'aide d'éléments de centrage concentriques les unes par rapport aux autres et de manière centrée et mutuellement par un moyen de vissage central (20, 21).

3. Tête d'extrusion selon l'une des revendications 1 ou 2,
caractérisée en ce que
le cône intérieur (6a) de l'embout (10) formant embouchure se monte sur une pièce de guidage centrale (20) et se fixe à l'aide d'une vis à tête (21) centrale vissée à la pièce de guidage (20).

4. Tête d'extrusion selon la revendication 3,
caractérisée en ce que
la pièce de guidage est formée par une broche centrale munie d'une partie à filet extérieure vissée dans le cône intérieur (6) de la pièce intermédiaire (12) et ayant un filetage intérieur à l'extrémité située du côté de l'embout formant embouchure.

5. Tête d'extrusion selon la revendication 3 ou 4,
caractérisée par
une pièce rapportée (40) sur la pièce de guidage centrale (20) qui reçoit le cône intérieur (6a) de l'embout (10) et dont l'intérieur est muni d'éléments chauffants (41).

6. Tête d'extrusion selon l'une des revendications 1 à 5,
caractérisée en ce que
le cône extérieur (5a) de l'embout (10) est fixé de manière réglable radialement de façon limitée sur le cône extérieur (5b) de la partie de tête de buse voisine (9, 12).

7. Tête d'extrusion selon l'une des revendications 1 à 6,
caractérisée en ce que
le cône extérieur (5a) de l'embout (10) est fixé sur le cône extérieur (5b) de la partie de tête de buse voisine à l'aide d'une liaison rapide (13) à baïonnette.

8. Tête d'extrusion selon les revendications 6 et 7,
caractérisée en ce que
la liaison rapide à baïonnette (13) comprend un anneau de fermeture et de serrage (15) vissé sur le cône extérieur (5b) de la partie de tête de buse (9, 12) voisine de l'embout (10), cet anneau formant un intervalle de serrage (17) délimité sur la face avant par ses bossages de liaison (16), cet intervalle étant réglable par les liaisons à vis (14) pour recevoir de manière réglable radialement, limitée, des épaulements de verrouillage (18) sur le cône extérieur (5a) de l'embout (10).

9. Tête d'extrusion selon la revendication 8,
caractérisée en ce que
l'anneau de fermeture et de serrage (15) comporte des vis de réglage (19), pénétrant radialement avec l'extrémité de leur corps de vis dans l'intervalle de serrage (17).

10. Tête d'extrusion selon l'une des revendications 1 à 9,
caractérisée en ce que
le cône extérieur (5b) de la pièce intermédiaire (12) et le cône (5c) de la base (11) sont reliés entre eux au niveau de brides de serrage coniques (23, 24) à l'aide d'un anneau de serrage (22) entourant ces brides.

11. Tête d'extrusion selon l'une des revendications 1 à 10,
caractérisée en ce que
le cône extérieur (5b) de la pièce intermédiaire (12) et le cône (5c) de la base (11) sont reliés l'un à l'autre par une liaison rapide à baïonnette.

12. Tête d'extrusion selon la revendication 11,
caractérisée en ce que
la liaison rapide entre les cônes extérieurs (5b, 5c) de la partie intermédiaire (12) et de la base (11) correspond à la liaison rapide entre le cône extérieur (5a, 5b) de l'embout (10) et de la pièce intermédiaire (12).

13. Tête d'extrusion selon l'une des revendications 1 à 6,
caractérisée en ce que
pour relier les cônes extérieurs (5a, 5b ; 5b, 5c), ils comportent des aimants permanents aimantés et désaimantés par action électrique.

14. Tête d'extrusion selon l'une des revendications 1 à 13,
caractérisée en ce que
le cône intérieur et le cône extérieur (5a, 5b) de l'embout (10) sont munis de moyens de liaison (30, 33) pour être reliés à une pièce de support et de prise (31, 32) d'un dispositif de changement (29) à l'aide duquel les cônes (5a, 6a) de l'embout (10) peuvent être enlevés, installés et/ou démontés en commun ou séparément.

15. Tête d'extrusion selon la revendication 14,
caractérisée en ce que
le dispositif de remplacement auxiliaire (29) comporte des pièces de support et de prise (31, 32) pour être coulissé globalement dans la direction longitudinale et/ou transversale.
